# EUROPEAN PATENT APPLICATION

(11) **EP 4 640 865 A1**
(43) Date of publication of application: **29.10.2025**
(21) Application number: 23907307.5
(22) Date of filing: 21.09.2023
(51) Int. Cl.: C22C 38/02, C22C 38/04, C22C 38/06, C22C 38/00, C22C 38/42, C22C 38/14, C22C 38/12, C21D 8/12

(54) **NON-ORIENTED ELECTRICAL STEEL SHEET AND METHOD FOR MANUFACTURING SAME**

(30) Priority: 21.12.2022 KR 20220180323
(71) Applicant: POSCO Co., Ltd, Pohang-si, Gyeongsangbuk-do 37859 (KR)
(72) Inventor: LEE, Hunju, Pohang-si, Gyeongsangbuk-do 37859 (KR); LEE, Sangwoo, Pohang-si, Gyeongsangbuk-do 37859 (KR); KIM, Yun Su, Pohang-si, Gyeongsangbuk-do 37859 (KR)
(74) Representative: Meissner Bolte Partnerschaft mbB
(86) International application number: PCT/KR2023/014375
(87) International publication number: WO 2024/136021

(57) **Abstract**

An embodiment of the present invention provides a non-oriented electrical steel sheet, including, in wt%, Si: 1.5 to 4.5%, Al: 0.1 to 1.5%, and Mn: 0.1 to 0.5%, with a balance being Fe and inevitable impurities, wherein when a texture is represented by an ODF, an orientation having a highest strength is positioned within 5° of {110}<115>.

## Description

### [Technical Field]

An embodiment of the present invention relates to a non-oriented electrical steel sheet and a method for manufacturing the same. Specifically, an embodiment of the present invention relates to a non-oriented electrical steel sheet and a method for manufacturing the same, in which a descaling process for a hot-rolled sheet is omitted, and a pickling process is performed after first cold-rolling, thereby developing grains having a specific orientation and improving magnetism.

### [Background Art]

A non-oriented electrical steel sheet is mainly used in a motor that converts electrical energy to mechanical energy, and an excellent magnetic characteristic of the non-oriented electrical steel sheet is required to achieve high efficiency while the motor converts the electrical energy to the mechanical energy. In particular, recently, as environmentally-friendly vehicles driven by motors instead of internal combustion engines have been gaining attention, the demand for non-oriented electrical steel sheets used as driving motor core materials is increasing, and for this purpose, non-oriented electrical steel sheets with excellent magnetic properties and strength are required. The magnetic properties of non-oriented electrical steel sheets are mainly evaluated by iron loss and magnetic flux density. The iron loss means energy loss occurring at a specific magnetic flux density and frequency, and the magnetic flux density means a degree of magnetization obtained in a specific magnetic field. Lower iron loss allows for more energy-efficient motors to be manufactured under the same conditions, and higher magnetic flux density allows for smaller motors or reduced copper loss. Therefore, by using non-oriented electrical steel sheets with low iron loss and high magnetic flux density, a driving motor with excellent efficiency and torque may be manufactured, thereby improving the driving range and output of environmentally-friendly vehicles. Depending on operational conditions of the motor, the characteristics of the non-oriented electrical steel sheet that should be considered is also varied. The general standard for evaluating the characteristics of non-oriented electrical steel sheets used in motors is widely used as W15/50, which is the iron loss when a 1.5T magnetic field is applied at a commercial frequency of 50Hz. However, in the case of non-oriented electrical steel sheets with a thickness of 0.35 mm or less used in environmentally-friendly vehicle driving motors, magnetic properties are often important at low magnetic fields of 1.0 T or less and high frequencies of 400 Hz or higher, so the properties of non-oriented electrical steel sheets are often evaluated using the W10/400 iron loss. A commonly used method to improve the magnetic properties of non-oriented electrical steel sheets is to add alloying elements such as Si, Al, and Mn. When the specific resistance of the steel increases through the addition of these alloying elements, the eddy current loss decreases lowering the overall iron loss. Additionally, these alloying elements may be dissolved in iron as substitutional elements to cause a strengthening effect, thereby increasing strength. On the contrary, as the amount of alloy elements such as Si, Al, and Mn added increases, the magnetic flux density is deteriorated and brittleness increases, and when more than a certain amount thereof is added, it may not be cold-rolled and may not be able to be commercially produced. In particular, as the thickness of electrical steel sheets is reduced, high-frequency iron loss becomes better, but the reduction in rollability due to brittleness becomes a critical problem. The maximum total content of Si, Al, and Mn that may be commercially produced is known to be approximately 4.5 wt and by optimizing the content of trace elements, it is possible to produce the highest quality non-oriented electrical steel with excellent magnetism and strength. However, when a large amount of high specific resistance alloying elements such as Si, Al, Mn, and Cr are added, the problem of a decrease in magnetic flux density occurs. Particularly, the use of materials with high magnetic flux density is essential for materials that continuously require weight reduction, such as environmentally-friendly electric vehicle driving motors. To this end, a method of improving properties by thinning the hot-rolled sheet has been proposed, and a method of improving magnetism by including high Al and performing double annealing and double rolling has been proposed. In addition, a method of thinning a hot-rolled sheet through a thin slab manufacturing method has been proposed. However, the method of reducing the thickness of the hot-rolled sheet is difficult to mass-produce due to the increase in rolling load in the general hot-rolling process, and although the addition of high Al and the double annealing and double rolling processes have some improvement in magnetism, the {110}<001> Goss texture also develops, so the circumferential characteristics of the motor deteriorate and surface defects due to the addition of high Al also increase significantly.

### [Disclosure]

An embodiment of the present invention provides a non-oriented electrical steel sheet and a method for manufacturing the same. Specifically, an embodiment of the present invention provide a non-oriented electrical steel sheet and a method for manufacturing the same, in which a descaling process for a hot-rolled sheet is omitted, and a pickling process is performed after first cold-rolling, thereby developing grains having a specific orientation and improving magnetism.

An embodiment of the present invention provides a non-oriented electrical steel sheet, including, in wt%, Si: 1.5 to 4.5%, Al: 0.1 to 1.5%, and Mn: 0.1 to 0.5%, with a balance being Fe and inevitable impurities, wherein when a texture is represented by an ODF, an orientation having a highest strength is positioned within 5° of {110}<115>.

In the embodiment of the present invention, when a texture is represented by an ODF, a {110}<115> orientation strength may be more than three times a {001}<100> orientation strength.

The non-oriented electrical steel sheet according to the embodiment of the present invention may further include 0.01 to 0.1 wt% in each or a combined amount of Te: 0.001 to 0.007 wt% and at least one of Sn and Sb.

The non-oriented electrical steel sheet according to the embodiment of the present invention may further include one or more of Cu: 0.005 to 0.2 wt%, Cr: 0.01 to 0.5 wt%, Ni: 0.05 wt% or less (excluding 0%), Zn: 0.01 wt% or less (excluding 0%), and Co: 0.05 wt% or less (excluding 0%).

The non-oriented electrical steel sheet according to the embodiment of the present invention may further include one or more of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

The non-oriented electrical steel sheet according to the embodiment of the present invention may further include one or more of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.0050 wt% or less (excluding 0%), and Mg: 0.0050 wt% or less (excluding 0%). It may further include one or more of Zr: 0.005 wt% or less (excluding 0%) and Mg: 0.0050 wt% or less (excluding 0%).

An average grain size may be 50 to 150 µm.

A difference in B50 magnetic flux density in a rolling direction and a rolling vertical direction may be 0.05 to 0.07 T.

Another embodiment of the present invention provides a method for manufacturing a non-oriented electrical steel sheet, including: a step of hot-rolling a slab including, in wt%, Si: 1.5 to 4.5%, Al: 0.1 to 1.5%, Mn: 0.1 to 0.5%, with a balance being Fe and inevitable impurities, to manufacture a hot-rolled sheet; a step of first cold-rolling the hot-rolled sheet in a state in which scale remains on the hot-rolled sheet to manufacture a first cold-rolled sheet; a step of pickling the first cold-rolled sheet; a step of second cold-rolling the pickled first cold-rolled sheet to produce a second cold-rolled sheet; and a cold-rolled sheet annealing step of annealing the second cold-rolled sheet.

The slab may further include 0.01 to 0.1 wt% in each or a combined amount of Te: 0.001 to 0.007 wt% and at least one of Sn and Sb.

The slab may further include one or more of Cu: 0.005 to 0.2 wt%, Cr: 0.01 to 0.5 wt%, Ni: 0.1 wt% or less (excluding 0%), Zn: 0.01 wt% or less (excluding 0%), and Co: 0.05 wt% or less (excluding 0%).

The slab may further include one or more of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

The slab may further include one or more of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.0050 wt% or less (excluding 0%), and Mg: 0.0050 wt% or less (excluding 0%).

The method for manufacturing the non-oriented electrical steel sheet may further include a step of heating the slab to a temperature of 1200°C or less before the step of manufacturing the hot-rolled sheet.

In the step of manufacturing the hot-rolled sheet, hot-rolling may be performed at a finishing rolling temperature of 800°C or higher, and winding may be performed at 550°C or lower.

After the step of manufacturing the hot-rolled sheet, the hot-rolled sheet may be cooled, and the cooled hot-rolled sheet may be first cold-rolled.

The method for manufacturing the non-oriented electrical steel sheet may include, in the process of cooling the hot-rolled sheet after the step of manufacturing the hot-rolled sheet, a step of rewinding a coil at a temperature of 350°C or higher, wherein the rewinded hot-rolled sheet may be first cold-rolled.

In the step of manufacturing the first cold-rolled sheet, a reduction ratio may be 40 to 70%. A friction coefficient between a cold-rolling work roll and the steel sheet may be 0.4 or more.

The method for manufacturing the non-oriented electrical steel sheet may further include, after the step of manufacturing the first cold-rolled sheet, an intermediate annealing step of annealing the first cold-rolled sheet at 900°C or higher.

In the step of manufacturing the second cold-rolled sheet, a reduction ratio may be 55 to 80%. A friction coefficient between a cold-rolling work roll and the steel sheet may be 0.2 or less.

The cold-rolled sheet annealing step may be performed at a temperature of 850°C or higher in a mixed gas atmosphere of hydrogen (H₂) and nitrogen (N₂).

The non-oriented electrical steel sheet according to the embodiment of the present invention may have even better characteristics by optimizing the crystal orientation and improving the anisotropy of magnetic flux density.

Ultimately, the non-oriented electrical steel sheet according to an embodiment of the present invention contributes to the manufacture of environmentally-friendly automobile motors, high-efficiency home appliance motors, and super premium-grade electric motors.

### [Mode for Invention]

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise stated, % means wt%, and 1 ppm is 0.0001 wt%.

In embodiments of the present invention, inclusion of an additional element means replacing the remaining iron (Fe) by an additional amount of the additional elements.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

The present invention will be described more fully hereinafter with reference to the accompanying drawings, in which embodiments of the invention are shown. As those skilled in the art would realize, the described embodiments may be modified in various different ways, all without departing from the spirit or scope of the present disclosure.

A non-oriented electrical steel sheet according to an embodiment of the present invention includes, in wt%, Si: 1.5 to 4.5%, Al: 0.1 to 1.5%, and Mn: 0.1 to 0.5%.

Hereinafter, the reason for limiting the components of the non-oriented electrical steel sheet will be described.

### Si: 1.5 to 4.5 wt%

Silicon (Si) increases the specific resistance of the material, lowers iron loss, and increases strength through solid solution strengthening. if too little Si is added, an effect of improving the iron loss and strength may be insufficient. If too much Si is added, brittleness of the material increases, and rolling productivity is rapidly deteriorated, and an oxide layer and an oxide on a surface that are harmful to magnetism may be formed. Accordingly, Si may be included in an amount of 1.5 to 4.5 wt%. More specifically, it may be included in an amount of 2.0 wt% to 4.3 wt%. More specifically, it may be included in an amount of 3.0 to 3.7 wt%.

### Al: 0.1 to 1.5 wt%

Aluminum (Al) increases the specific resistance of the material, lowers iron loss, and increases strength through solid solution strengthening. If too little Al is added, fine nitrides may be formed, making it difficult to obtain the effect of improving magnetism. If too much Al is added, the nitride is excessively formed, deteriorating the magnetism, and causing problems in all processes such as steel making and continuous casting, which may considerably reduce productivity. Accordingly, Al may be included in an amount of 0.1 to 1.5 wt%. More specifically, it may be included in an amount of 0.3 wt% to 1.2 wt%. More specifically, it may be included in an amount of 0.5 to 1.0 wt%.

### Mn: 0.1 to 0.5 wt%

Manganese (Mn) improves the iron loss by increasing the specific resistance of the material and serves to form a sulfide. If too little Mn is added, the sulphide is finely formed, causing magnetic deterioration, and when too much Mn is added, fine MnS is excessively precipitated and the formation of a {111} texture unfavorable to magnetism is promoted, resulting in a rapid decrease in magnetic flux density. Accordingly, Mn may be included in an amount of 0.1 to 0.5 wt%. More specifically, it may be included in an amount of 0.2 wt% to 0.4 wt%.

The non-oriented electrical steel sheet according to the embodiment of the present invention may further include 0.01 to 0.1 wt% in each or a combined amount of Te: 0.001 to 0.007 wt% and at least one of Sn and Sb.

### Te: 0.001 to 0.007 wt%

Tellurium (Te) diffuses into the oxide layer on the surface of a hot-rolled coil, increases the coefficient of friction between the oxide layer and the rolling work roll, and improves hardness by concentrating under the oxide layer, so that it may be added to prevent the oxide layer that is broken during rolling from being pressed into the base metal and to be removed. If the amount of Te added is too small, the effect may be insignificant. If too much Te is added, the oxide layer is easily removed, causing the base material to come into direct contact with the work roll, thereby reducing the above effect, and excessive deformation bands may be generated within the steel sheet during cold-rolling, which may lead to the development of {111}//ND texture, which is unfavorable for magnetism One or more of Sn and Sb at 0.01 to 0.1 wt%

Tin (Sn) and antimony (Sb) segregate at grain boundaries and surfaces to improve the texture of the material and suppress surface oxidation, and thus may be added to improve magnetic properties. If the amount of Sn and Sb added is too small, the effect is insignificant and the coefficient of friction between the oxide layer on the surface of the hot-rolled coil and the rolling work roll may be reduced, thereby deteriorating the magnetic properties and surface quality. If Sn and Sb are added too much, grain boundary segregation is severe, the surface quality is deteriorated, hardness is increased, and the cold-rolled sheet is broken, thereby reducing rollability. Therefore, one or more of Sn and Sb may be further added within the aforementioned range. More specifically, Sn may be included in an amount of 0.01 to 0.05 wt%, or Sb may be included in an amount of 0.01 to 0.05 wt%. More specifically, Sn may be included in an amount of 0.01 to 0.05 wt%, and Sb may be included in an amount of 0.01 to 0.05 wt%. When Sn and Sb are added simultaneously, the combined amount may be 0.01 to 0.1 wt%.

The non-oriented electrical steel sheet according to the embodiment of the present invention may further include one or more of Cu: 0.005 to 0.2 wt%, Cr: 0.01 to 0.5 wt%, Ni: 0.05 wt% or less (excluding 0%), Zn: 0.01 wt% or less (excluding 0%), and Co: 0.05 wt% or less (excluding 0%).

### Cu: 0.01 wt% or less

Copper (Cu) serves to form sulfides together with Mn. If Cu is added further, if too little Cu is added, CuMnS may be finely precipitated and magnetism may be degraded. If too much Cu is added, high temperature brittleness occurs, which may form cracks during casting or hot-rolling. More specifically, Cu may be included in an amount of 0.001 to 0.01 wt%.

### Cr: 0.50 wt% or less

Chromium (Cr) serves to improve iron loss by increasing specific resistance. If too much Cr is included, the magnetic flux density may deteriorate. More specifically, when Cr is further included, 0.01 to 0.10 wt% of Cr may be included.

### Ni: 0.05 wt% or less

Nickel (Ni), while not forming fine precipitates that degrade the magnetism of the steel sheet, may form an enriched layer at or just below the surface of the steel sheet, which may impair workability during hot-rolling or cold-rolling process.

### Zn: 0.01 wt% or less

Zinc (Zn), while not forming fine precipitates that degrade the magnetism of the steel sheet, is an element with a high affinity for oxygen, so that it may promote the formation of an oxide layer on the surface of the steel sheet.

### Co: 0.05 wt% or less

Cobalt (Co), while not forming fine precipitates that degrade the magnetism of the steel sheet, may increase high-temperature strength, leading to poor coil shape after hot-rolling.

The non-oriented electrical steel sheet according to the embodiment of the present invention may further include one or more of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

### P: 0.100 wt% or less

Phosphorus (P) deteriorates hot working characteristics, thereby deteriorating productivity compared to improving magnetic properties. Therefore, P may be included in an amount of 0.100 wt% or less. The lower limit thereof is not particularly limited, but it may be set to 0.005 wt% because it segregates on the surface and grain boundaries of the steel sheet to suppress surface oxidation during annealing, hinders diffusion of elements through grain boundaries, and improves the texture by hindering recrystallization in the {111}//ND orientation. More specifically, P may be included in an amount of 0.005 to 0.050 wt%. More specifically, P may be included in an amount of 0.010 to 0.030 wt%.

### C: 0.0050 wt% or less

Carbon (C) causes magnetic aging and combines with other impurity elements to form carbides, which deteriorates magnetic properties, but improves strength by hindering dislocation movement. If too much C is included, the fine carbide fraction may increase, which may deteriorate the magnetism. Accordingly, C may be included in an amount of 0.0050 wt% or less. The lower limit of C is not particularly limited, but considering productivity, it may be included in an amount of 0.0010 wt% or more. That is, C may be included in an amount of 0.0010 wt% to 0.0050 wt%. More specifically, it may be included in an amount of 0.0010 wt% to 0.0030 wt%.

### S: 0.0050 wt% or less

Sulfur (S) forms fine precipitates, MnS and CuS, which worsen magnetic properties and hot workability. Therefore, S may be included in an amount of 0.0050 wt% or less. However, in an embodiment of the present invention, it helps in the development of grains having a specific orientation and helps in improving the magnetic flux density, so it may be added in an amount of 0.0005 wt% or more in the embodiment of the present invention. More specifically, S may be included in an amount of 0.0010 to 0.0030 wt%.

### Ti: 0.0050 wt% or less

Titanium (Ti) has a strong tendency to form precipitates inside the steel, and they deteriorate the iron loss by forming fine carbides, nitrides, or sulfides inside the base material, thereby suppressing grain growth and domain wall movement. Therefore, the Ti content may be 0.0050 wt% or less. The lower limit thereof is not particularly limited, but it may be set at 0.0003 wt% due to steelmaking costs. That is, each may include 0.0003 to 0.0050 wt% of Ti. More specifically, it may be included in an amount of 0.0003 wt% to 0.0030 wt%.

### N: 0.0050 wt% or less

Nitrogen (N) not only forms fine AIN precipitates inside the base material, but also combines with other impurities to form fine precipitates, suppressing grain growth and worsening iron loss. Accordingly, N may be included in an amount of 0.0050 wt% or less. The lower limit of N is not particularly limited, but since N helps improve strength, the lower limit may be set to 0.0003 wt%. That is, N may be included in an amount of 0.0003 to 0.0050 wt%. More specifically, it may be included in an amount of 0.0010 wt% to 0.0030 wt%.

The non-oriented electrical steel sheet according to the embodiment of the present invention may further include one or more of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.005 wt% or less (excluding 0%), and Mg: 0.0050 wt% or less (excluding 0%). It may further include one or more of Zr: 0.005 wt% or less (excluding 0%) and Mg: 0.0050 wt% or less (excluding 0%).

### Mo: 0.030 wt% or less

If molybdenum (Mo) is added in excessive amounts, the effect of improving the texture may be reduced by suppressing the segregation of segregation elements. Therefore, Mo may be included in an amount of 0.03 wt% or less. The lower limit thereof is not particularly limited, but it may be included in an amount of 0.001 wt% or more because it serves to improve the texture by segregating on the surface and grain boundaries. More specifically, Mo may be included in an amount of 0.001 to 0.010 wt%. More specifically, Mo may be included in an amount of 0.005 to 0.010 wt%.

### B: 0.005 wt% or less

If boron (B) is added in excessive amounts, it may cause deterioration of magnetism through the formation of inclusions in the steel. Therefore, B may be included in an amount of 0.005 wt% or less. The lower limit thereof is not particularly limited, but it may be set at 0.0001 wt% due to steelmaking costs. More specifically, B may be included in an amount of 0.0001 to 0.0030 wt%.

### V: 0.0050 wt% or less

Vanadium (V) has a strong tendency to form precipitates inside the steel, and they deteriorate the iron loss by forming fine carbides or nitrides inside the base material, thereby suppressing grain growth and domain wall movement. Therefore, the content of V may each be 0.0050 wt% or less. The lower limit thereof is not particularly limited, but it may be set at 0.0003 wt% due to steelmaking costs. That is, V may be included in an amount of 0.0003 to 0.0050 wt%. More specifically, V may be included in an amount of 0.0003 to 0.0030 wt%.

### Ca: 0.0050 wt% or less

Calcium (Ca) has a strong tendency to form precipitates inside the steel, and they deteriorate the iron loss by forming fine sulfides inside the base material, thereby suppressing grain growth and domain wall movement.

### Nb: 0.0050 wt% or less

Niobium (Nb) has a strong tendency to form precipitates inside the steel, and they deteriorate the iron loss by forming fine carbides or nitrides inside the base material, thereby suppressing grain growth and domain wall movement. Therefore, the Nb content may be 0.0050 wt% or less. The lower limit thereof is not particularly limited, but it may be set at 0.0003 wt% due to steelmaking costs. That is, Nb may be included in an amount of 0.0003 to 0.0050 wt%. More specifically, Nb may be included in an amount of 0.0003 to 0.0030 wt%.

### Zr: 0.005 wt% or less

If zirconium (Zr) is added in excessive amounts, it may cause deterioration of magnetism through the formation of inclusions in the steel. Therefore, Zr may be included in an amount of 0.005 wt% or less. The lower limit thereof is not particularly limited, but it may be set at 0.0001 wt% due to steelmaking costs. That is, Zr may be included in an amount of 0.0001 to 0.0050 wt%. More specifically, it may be included in an amount of 0.0005 wt% to 0.0030 wt%.

### Mg: 0.0050 wt% or less

Magnesium (Mg) is an element that mainly combines with sulfur to form sulfides, and may affect the surface oxide layer of iron. Therefore, Mg may be included in an amount of 0.0050 wt% or less. The lower limit thereof is not particularly limited, but it may be set at 0.0001 wt% due to steelmaking costs. That is, Mg may be included in an amount of 0.0001 to 0.0050 wt%. More specifically, it may be included in an amount of 0.0005 wt% to 0.0030 wt%.

The balance includes Fe and inevitable impurities. The inevitable impurities are impurities mixed in the steel-making and the manufacturing process of the non-oriented electrical steel sheet, which are widely known in the field, and thus a detailed description thereof will be omitted. In the embodiment of the present invention, the addition of elements other than the above-described alloy components is not excluded, and various elements may be included within a range that does not hinder the technical concept of the present invention. When the additional elements are further included, they replace the balance of Fe.

In the non-oriented electrical steel sheet according to the embodiment of the present invention, when a texture is represented by orientation distribution function (ODF), an orientation having the highest intensity is positioned within 5° of {110}<115>. This means that a large amount of grains with orientations near {110}<115> were formed, and that a larger amount was produced compared to other orientations, and {110}<115> may significantly improve the magnetic properties in the rolling direction and the rolling vertical direction, thereby contributing to enhance magnetism. More specifically, the orientation with the highest intensity may be positioned within 5° in {110}<115>. The angle with {110}<115> means the angle formed by the {110}<115> direction and the arbitrary direction on a plane including the {110}<115> direction and the arbitrary direction. The analysis position of ODF is not particularly limited, but analysis may be performed by measuring the TD surface of the steel sheet sufficiently widely. The ODF may be measured using EBSD and analyzed using OIM Software. The Harmonic series expansion method may be used, and analysis may be performed by setting I(max)=22. Specifically, the intensity in {110}<115> may be 3 to 15.

In order to form a large number of grains having orientations near {110}<115>, the steel composition and manufacturing process must be appropriately controlled. This will be described in detail in the following description regarding a method for manufacturing a non-oriented electrical steel sheet, and thus, redundant descriptions will be omitted.

In the embodiment of the present invention, when the texture of the non-oriented electrical steel sheet is represented by an ODF, the {110}<115> orientation strength may be at least three times the {001}<100> orientation strength. The {001}<100> orientation is theoretically the orientation that makes the magnetic properties in the rolling direction and the rolling vertical direction the best, but the {110}<115> orientation is also an orientation that may make the magnetic properties in the rolling direction and the rolling vertical direction the best, and the fact that the {110}<115> orientation has a strength that is three times greater than that of the {001}<100> orientation means that the deformation, recovery, and recrystallization processes applied to the material have undergone distinctly different processes. More specifically, the {110} orientation strength may be 3.5 to 5 times the {001} orientation strength. The {001}<100> orientation strength may be 0.3 to 1.5.

The non-oriented electrical steel sheet according to the embodiment of the present invention may have an average grain size of 50 to 150 µm. When an appropriate average grain size is secured, magnetism may be improved. In particular, it may improve high-frequency iron loss. In an embodiment of the present invention, the grain size means the diameter of a virtual circle having the same area as the grain area. The average grain size may be calculated as 2×(measured area ÷ number of grains ÷ π)^{0.5}. The grain size may be measured based on the rolling vertical plane (TD plane). The measurement position is not particularly limited, but it may be measured at a point 1/4 to 3/4 of the total thickness of the steel sheet. More specifically, the average grain size may be 60 to 95 µm.

The non-oriented electrical steel sheet according to the embodiment of the present invention has excellent anisotropy of magnetic flux density and excellent high-frequency iron loss. When manufacturing an environmentally-friendly vehicle driving motor using the non-oriented electrical steel sheet according to the embodiment of the present invention, there is an advantage in that the efficiency of the motor may be improved while minimizing an increase in cost, thereby increasing the driving distance of an environmentally-friendly vehicle on a single charge.

Specifically, the core loss (W_{10/400}) of the non-oriented electrical steel sheet may be 12.0 W/kg or less based on a thickness of 0.25 mm, the magnetic flux density (B_{50L}) measured in the rolling direction may be 1.69 T or more, and the magnetic flux density (B_{50C}) measured in the direction perpendicular to the rolling direction may be 1.65 T or more. More specifically, the iron loss (W_{10/400}) may be 10.5 to 11.5 W/kg, the magnetic flux density (B_{50L}) measured in the rolling direction may be 1.70 to 1.75 T, and the magnetic flux density (B_{50C}) measured in the direction perpendicular to the rolling direction may be 1.66 to 1.70 T.

A method for manufacturing a non-oriented electrical steel sheet according to an embodiment of the present invention includes a step of hot-rolling a slab to manufacture a hot-rolled sheet; a step of first cold-rolling the hot-rolled sheet while scale remains on the hot-rolled sheet to manufacture a first cold-rolled sheet; a step of pickling the first cold-rolled sheet; a step of second cold-rolling the pickled first cold-rolled sheet to manufacture a second cold-rolled sheet; and a cold-rolled sheet annealing step of annealing the second cold-rolled sheet.

First, the slab is hot-rolled.

The alloy composition of the slab has been described in the alloy composition of the non-oriented electrical steel sheet described above, so duplicate descriptions will be omitted. Since the alloy composition does not substantially change during the manufacturing process of the non-oriented electrical steel sheet, the alloy composition of the non-oriented electrical steel sheet and the slab are substantially the same.

Specifically, the slab includes, in wt%, Si: 1.5 to 4.5%, Al: 0.1 to 1.5%, Mn: 0.1 to 0.5%, with the balance being Fe and inevitable impurities.

Other additional elements have been described in the alloy composition of the non-oriented electrical steel sheet, so duplicate descriptions will be omitted.

The slab may be heated before hot-rolling. The heating temperature of the slab is not limited, but the slab may be heated at 1,200 °C or less. When the slab heating temperature is too high, precipitates such as AIN and MnS present in the slab are re-dissolved and then finely precipitated during hot-rolling and annealing, thereby inhibiting grain growth and reducing magnetism.

Next, the slab is hot-rolled to manufacture the hot-rolled sheet. A thickness of the hot-rolled sheet may be 1.8 to 2.3 mm. In the manufacturing of the hot-rolled sheet, a finish rolling temperature may be 800 °C or higher. Specifically, it may be 800 to 1,000 °C. The hot-rolled sheet may be wound at temperatures of 550°C or less. By coiling the hot-rolled sheet at a low temperature, it is advantageous to form an oxide layer that can increase the friction coefficient in the first cold-rolling process. More specifically, the winding temperature of the hot-rolled sheet may be 400 to 525°C.

Next, the hot-rolled sheet is subjected to the first cold-rolling while the scale remains on the hot-rolled sheet. During hot-rolling, scale is generated on the surface of the hot-rolled sheet due to contact with air at high temperatures, and conventionally, this scale has been removed through methods such as pickling, shot blasting, or surface grinding, and then cold-rolling was performed. In the embodiment of the present invention, a descaling process such as pickling, shot blasting, or surface grinding is omitted, and cold-rolling is performed. By performing cold-rolling in a state in which the pickling process is omitted, the friction between the rolling work roll and the steel sheet increases, so that shear deformation is simultaneously applied in addition to plane deformation during rolling, and a specific orientation develops during recrystallization annealing. In the embodiment of the present invention, scale refers to a portion where elements such as Fe, Al, and Si combine with oxygen with oxygen on the surface of the steel sheet to form a phase different from that of the base material. The meaning that scale remains signifies that at least a 1 µm thick scale remains on the hot-rolled sheet. In this case, the scale thickness means the sum of the scale thicknesses formed on both surfaces of the steel sheet. If the remaining scale thickness is too thin, the effect due to the remaining scale may not be sufficiently achieved. Even if the scale thickness is thicker, the effect is not improved, and there is a problem that the yield of the steel sheet decreases. More specifically, a scale with a thickness of 0.1 to 1 µm may remain.

When cold-rolling is performed with scale remaining, the scale may be broken and cause physical defects on the surface of the steel sheet. In the embodiment of the present invention, this problem may be solved by controlling the holding time in the range of 400 to 500°C after coiling of a hot-rolled sheet, thereby concentrating Te under the oxide layer on the surface of the steel sheet, thereby facilitating the removal of the oxide layer during the first cold-rolling.

After the step of manufacturing the hot-rolled sheet, the hot-rolled sheet may be cooled, and the cooled hot-rolled sheet may be subjected to the first cold-rolling. That is, after hot-rolling, hot-rolled sheet annealing may be omitted and the first cold-rolling may be performed. When hot-rolled sheet annealing is omitted, the Te concentrated layer under the surface oxide layer of the steel sheet may be maintained, thereby harmlessly removing the oxide layer that causes surface defects.

The step of cooling the hot-rolled sheet may include a step of rewinding the coil at a temperature of 350°C or higher. By rewinding the coil, it is possible to physically break down the oxide layer that may cause surface defects in advance, thereby facilitating partial removal during the first cold-rolling. More specifically, it may be rewound at a temperature of 375 to 450°C.

The step of manufacturing the first cold-rolled sheet may have a reduction ratio of 40 to 70%. The reduction ratio may be calculated as (thickness before rolling - thickness after rolling) / thickness before rolling. If the reduction ratio is too low, the rolling load increases during the second cold-rolling, which reduces productivity, and the reduction ratio in the second cold-rolling increases, which may cause problems such as promoting fine <111>//ND orientation recrystallization. Conversely, if the reduction ratio is too high, the cold-rolling load increases, and the possibility of sheet breakage also increases. More specifically, the reduction ratio may be 50 to 65%.

The first cold-rolling step may be performed at a temperature ranging from 60 to 300°C. This temperature may be raised naturally by the temperature of the steel sheet rising due to friction between the steel sheet and the rolling rolls, or by applying heat from the outside. If the temperature is too low, the rolling load significantly increases, and the steel sheet may slip between the rolling rolls instead of being rolled, which may cause problems such as twisting. If the temperature is too high, oxidation of Si and Al may occur on the surface of the steel sheet, which may deteriorate magnetism, and issues such as ignition of rolling oil may occur. More specifically, it is preferably performed at a temperature of 70 to 250°C. The aforementioned temperature refers to the temperature of the steel sheet.

In this case, the coefficient of friction between the cold-rolling work roll and the steel sheet during the first cold-rolling may be 0.4 or more. When a plurality of work rolls are present, the coefficient of friction with the work roll positioned first may be 0.4 or more. The higher the coefficient of friction, the more advantageous it is for developing a texture that is favorable for magnetism during the final recrystallization annealing. More specifically, it may be 0.45 to 0.7.

After the step of manufacturing the first cold-rolled sheet, an intermediate annealing step of annealing the first cold-rolled sheet at 900°C or higher may be further included. If the annealing temperature is too low, the grain size becomes fine and the grain boundaries increase, which increases the number of <111>//ND orientation recrystallization nuclei at the grain boundaries during the second cold-rolling, ultimately resulting in a decrease in the magnetic flux density. Specifically, the temperature of the intermediate annealing step may be 900 to 1100°C. The intermediate annealing time may be 10 seconds to 600 seconds.

Next, the first cold-rolled sheet is pickled. If scale remains in the final manufactured non-oriented electrical steel sheet, it will harm the magnetism. In addition, when performing the second cold-rolling while the scale remains, the marks of the scale being pressed into or removed from the surface may form unevenness, which may deteriorate the operational stability and magnetic characteristics of the motor. After pickling, the scale may be completely removed or may be present at a thickness of 0.01 µm or less. Pickling refers to all physical and chemical descaling methods, not just acid immersion. The pickling methods may include acid immersion, shot blasting, or surface grinding.

Next, the pickled first cold-rolled sheet is subjected to a second cold-rolling. In this case, the reduction ratio may be in the range of 55 to 80%. If the reduction ratio is too low, the strain energy accumulated in the rolled steel sheet is small, making it difficult to recrystallize in the subsequent annealing process, so the the rolled structure remains, which may cause problems in improving the magnetic flux density and iron loss. Conversely, if the reduction ratio is too high, the recrystallization of <111>//ND orientation grains may be promoted during the subsequent annealing process, and the grains may become finer, resulting in a lower magnetic flux density and an increase in iron loss. More specifically, the reduction ratio may be 60 to 75%.

In this case, the coefficient of friction between the cold-rolling work roll and the steel sheet during the second cold-rolling may be 0.2 or less. The lower the coefficient of friction, the more advantageous it is for the texture formed during the intermediate annealing process to be maintained without being transformed into a texture unfavorable to magnetism due to shear deformation. Specifically, it may be 0.01 to 0.15.

The final rolled thickness may be from 0.1 mm to 0.35 mm.

Next, the second cold-rolled sheet is annealed. The cold-rolled sheet annealing step can be performed in an atmosphere having a mixed gas and atmosphere of hydrogen (H₂) and nitrogen (N₂). The mixed gas may contain 40 vol% or less of hydrogen and 60 vol% or more of nitrogen.

The cold-rolled sheet annealing step may be performed at a temperature of 850 °C or higher. The above mentioned temperature refers to the soaking temperature. If the soaking temperature is too low, the grains may not grow sufficiently, which may cause the hysteresis loss to increase and the iron loss to deteriorate. If the soaking temperature is too high, problems such as increased eddy current loss and rapid decrease in magnetic flux density may occur. More specifically, annealing may be performed at a temperature ranging from 850 to 1100°C. Annealing may be performed for 30 to 50 seconds.

In the cold-rolled sheet annealing process, the processed texture formed in the cold-rolling step may be entirely (that is, 99 % or more) recrystallized.

After the cold-rolled sheet annealing, an insulating film may be formed. The insulating film may be formed as an organic, inorganic, and organic/inorganic composite film, and it may be formed with other insulating coating materials.

Hereinafter, the present invention will be described in more detail through examples. However, the examples are only for illustrating the present invention, and the present invention is not limited thereto.

### Example 1

A slab was manufactured with components containing the following Table 1 and the balance Fe and other inevitable impurities. This was heated at 1150 °C and hot-rolled at a finishing temperature of 880 °C to manufacture a hot-rolled sheet with a thickness of 2.0 mm. Specimen No. B2 was pickled to completely remove scale from the hot-rolled sheet.

Subsequently, the hot-rolled plate was subjected to the first cold-rolling under the conditions in the table without annealing, and then pickled to completely remove the scale. Intermediate annealing was performed, followed by the second cold-rolling to a final thickness of 0.25 mm. The second cold-rolled steel sheet was annealed at the temperature listed in the table.

The magnetic properties such as the magnetic flux density and the iron loss were measured by cutting 60 mm width × 60 mm length × 5 sheets of each specimen, and measuring the iron loss in the rolling direction and the direction perpendicular to the rolling using a single sheet tester, and the average value is shown. The magnetic flux density was measured in the rolling direction and the vertical rolling direction.

In this case, W_{10/400} is iron loss when a magnetic flux density of 1.0 T is induced at a frequency of 400 Hz, and B₅₀ is a magnetic flux density induced in a magnetic field of 5000 A/m.

The ODF was analyzed using EBSD and OIM software. The Harmonic series expansion method was used, and the analysis was performed by setting I(max)=22.

**(Table 1)**

| Specimen Number | Si [%] | Al [%] | Mn [%] | Te [%] | Sn [%] | Sb [%] |
|---|---|---|---|---|---|---|
| A1 | 2.8 | 1.40 | 0.40 | 0.005 | 0.02 | 0.05 |
| A2 | 2.8 | 1.40 | 0.40 | 0.024 | 0.08 | 0.01 |
| A3 | 2.8 | 1.40 | 0.40 | 0.003 | 0.03 | 0.05 |
| A4 | 2.8 | 1.40 | 0.40 | 0.005 | 0.07 | 0.01 |
| A5 | 2.8 | 1.40 | 0.40 | 0.004 | 0.04 | 0.03 |
| A6 | 2.8 | 1.40 | 0.40 | 0.004 | 0.06 | 0.01 |
| A7 | 2.8 | 1.40 | 0.40 | 0.004 | 0.05 | 0.01 |
| A8 | 2.8 | 1.40 | 0.40 | 0.005 | 0.05 | 0.01 |
| B1 | 3.4 | 0.95 | 0.30 | 0.003 | 0.02 | 0.01 |
| B2 | 3.4 | 0.95 | 0.30 | 0.005 | 0.01 | 0.01 |
| B3 | 3.4 | 0.95 | 0.30 | 0.004 | 0.03 | 0.03 |
| B4 | 3.4 | 0.95 | 0.30 | 0.005 | 0.07 | 0.01 |
| B5 | 3.4 | 0.95 | 0.30 | 0.004 | 0.04 | 0.03 |
| B6 | 3.4 | 0.95 | 0.30 | 0.005 | 0.06 | 0.01 |
| B7 | 3.4 | 0.95 | 0.30 | 0.004 | 0.05 | 0.03 |
| B8 | 3.4 | 0.95 | 0.30 | 0.004 | 0.05 | 0.01 |
| C1 | 3.6 | 0.75 | 0.20 | 0.003 | 0.003 | 0.002 |
| C2 | 3.6 | 0.75 | 0.20 | 0.003 | 0.02 | 0.05 |
| C3 | 3.6 | 0.75 | 0.20 | 0.004 | 0.08 | 0.01 |
| C4 | 3.6 | 0.75 | 0.20 | 0.005 | 0.03 | 0.05 |
| C5 | 3.6 | 0.75 | 0.20 | 0.003 | 0.07 | 0.01 |
| C6 | 3.6 | 0.75 | 0.20 | 0.004 | 0.04 | 0.05 |
| C7 | 3.6 | 0.75 | 0.20 | 0.003 | 0.06 | 0.01 |
| C8 | 3.6 | 0.75 | 0.20 | 0.005 | 0.05 | 0.03 |
| D1 | 4.2 | 0.30 | 0.15 | 0.004 | 0.02 | 0.03 |
| D2 | 4.2 | 0.30 | 0.15 | 0.0002 | 0.07 | 0.01 |
| D3 | 4.2 | 0.30 | 0.15 | 0.004 | 0.03 | 0.02 |
| D4 | 4.2 | 0.30 | 0.15 | 0.005 | 0.01 | 0.05 |
| D5 | 4.2 | 0.30 | 0.15 | 0.005 | 0.16 | 0.12 |
| D6 | 4.2 | 0.30 | 0.15 | 0.004 | 0.02 | 0.03 |
| D7 | 4.2 | 0.30 | 0.15 | 0.005 | 0.04 | 0.01 |
| D8 | 4.2 | 0.30 | 0.15 | 0.004 | 0.01 | 0.01 |

**(Table 2)**

| Specimen Number | Cu [%] | Cr [%] | Ni [%] | Zn [%] | Co [%] |
|---|---|---|---|---|---|
| A1 | 0.020 | 0.020 | 0.015 | 0.002 | 0.008 |
| A2 | 0.020 | 0.020 | 0.015 | 0.002 | 0.008 |
| A3 | 0.020 | 0.020 | 0.015 | 0.002 | 0.008 |
| A4 | 0.020 | 0.020 | 0.015 | 0.002 | 0.008 |
| A5 | 0.020 | 0.020 | 0.015 | 0.002 | 0.008 |
| A6 | 0.020 | 0.020 | 0.015 | 0.002 | 0.008 |
| A7 | 0.020 | 0.020 | 0.015 | 0.002 | 0.008 |
| A8 | 0.020 | 0.020 | 0.015 | 0.002 | 0.008 |
| B1 | 0.010 | 0.020 | 0.015 | 0.002 | 0.008 |
| B2 | 0.010 | 0.020 | 0.015 | 0.002 | 0.008 |
| B3 | 0.010 | 0.020 | 0.015 | 0.002 | 0.008 |
| B4 | 0.010 | 0.020 | 0.015 | 0.002 | 0.008 |
| B5 | 0.010 | 0.020 | 0.015 | 0.002 | 0.008 |
| B6 | 0.010 | 0.020 | 0.015 | 0.002 | 0.008 |
| B7 | 0.010 | 0.020 | 0.015 | 0.002 | 0.008 |
| B8 | 0.010 | 0.020 | 0.015 | 0.002 | 0.008 |
| C1 | 0.020 | 0.020 | 0.015 | 0.002 | 0.008 |
| C2 | 0.020 | 0.020 | 0.015 | 0.002 | 0.008 |
| C3 | 0.020 | 0.020 | 0.015 | 0.002 | 0.008 |
| C4 | 0.020 | 0.020 | 0.015 | 0.002 | 0.008 |
| C5 | 0.020 | 0.020 | 0.015 | 0.002 | 0.008 |
| C6 | 0.020 | 0.020 | 0.015 | 0.002 | 0.008 |
| C7 | 0.020 | 0.020 | 0.015 | 0.002 | 0.008 |
| C8 | 0.020 | 0.020 | 0.015 | 0.002 | 0.008 |
| D1 | 0.010 | 0.020 | 0.015 | 0.002 | 0.008 |
| D2 | 0.010 | 0.020 | 0.015 | 0.002 | 0.008 |
| D3 | 0.010 | 0.020 | 0.015 | 0.002 | 0.008 |
| D4 | 0.010 | 0.020 | 0.015 | 0.002 | 0.008 |
| D5 | 0.010 | 0.020 | 0.015 | 0.002 | 0.008 |
| D6 | 0.010 | 0.020 | 0.015 | 0.002 | 0.008 |
| D7 | 0.010 | 0.020 | 0.015 | 0.002 | 0.008 |
| D8 | 0.010 | 0.020 | 0.015 | 0.002 | 0.008 |

**(Table 3)**

| Specimen Number | Hot-rolling finishing temperatur e [°C] | Hot-rolled coil winding temperatur e [°C] | Whethe r to rewind hot-rolled coil | Hot-rolled coil rewinding temperatur e [°C] | Whethe r to pickle hot-rolled coil | Hot-rolling thicknes s [mm] |
|---|---|---|---|---|---|---|
| A1 | 900 | 500 | X | 400 | X | 1.25 |
| A2 | 900 | 500 | ○ | 400 | X | 1.56 |
| A3 | 900 | 500 | ○ | 400 | X | 1.00 |
| A4 | 900 | 500 | ○ | 400 | X | 4.17 |
| A5 | 900 | 500 | ○ | 400 | X | 1.25 |
| A6 | 900 | 500 | ○ | 400 | X | 1.56 |
| A7 | 900 | 500 | ○ | 400 | X | 1.67 |
| A8 | 900 | 500 | ○ | 400 | X | 2.08 |
| B1 | 750 | 500 | ○ | 400 | X | 1.25 |
| B2 | 900 | 500 | ○ | 400 | ○ | 1.56 |
| B3 | 900 | 500 | ○ | 400 | X | 1.67 |
| B4 | 900 | 500 | ○ | 400 | X | 2.08 |
| B5 | 900 | 500 | ○ | 400 | X | 1.25 |
| B6 | 900 | 500 | ○ | 400 | X | 1.56 |
| B7 | 900 | 500 | ○ | 400 | X | 1.67 |
| B8 | 900 | 500 | ○ | 400 | X | 2.08 |
| C1 | 900 | 500 | ○ | 400 | X | 1.25 |
| C2 | 900 | 630 | ○ | 400 | X | 1.56 |
| C3 | 900 | 500 | ○ | 400 | X | 1.19 |
| C4 | 900 | 500 | ○ | 400 | X | 4.17 |
| C5 | 900 | 500 | ○ | 400 | X | 1.25 |
| C6 | 900 | 500 | ○ | 400 | X | 1.56 |
| C7 | 900 | 500 | ○ | 400 | X | 1.67 |
| C8 | 900 | 500 | ○ | 400 | X | 2.08 |
| D1 | 900 | 500 | ○ | 200 | X | 1.25 |
| D2 | 900 | 500 | ○ | 400 | X | 1.56 |
| D3 | 900 | 500 | ○ | 400 | X | 1.67 |
| D4 | 900 | 500 | ○ | 400 | X | 2.08 |
| D5 | 900 | 500 | ○ | 400 | X | 1.25 |
| D6 | 900 | 500 | ○ | 400 | X | 1.56 |
| D7 | 900 | 500 | ○ | 400 | X | 1.67 |
| D8 | 900 | 500 | ○ | 400 | X | 2.08 |

**(Table 4)**

| Specimen Number | First cold-rolling reductio n ratio [%] | First cold-rolled friction coefficien t | Intermediat e annealing temperature [°C] | Second cold-rolling reductio n ratio [%] | Second cold-rolled friction coefficien t | Cold-rolled sheet annealing temperatur e [°C] |
|---|---|---|---|---|---|---|
| A1 | 50 | 0.3 | 1030 | 60 | 0.1 | 1000 |
| A2 | 60 | 0.3 | 1030 | 60 | 0.1 | 1000 |
| A3 | 50 | 0.5 | 1030 | 50 | 0.1 | 1000 |
| A4 | 80 | 0.5 | 1030 | 70 | 0.1 | 1000 |
| A5 | 50 | 0.5 | 1030 | 60 | 0.1 | 1000 |
| A6 | 60 | 0.5 | 1030 | 60 | 0.1 | 1000 |
| A7 | 50 | 0.5 | 1030 | 70 | 0.1 | 1000 |
| A8 | 60 | 0.5 | 1030 | 70 | 0.1 | 1000 |
| B1 | 50 | 0.3 | 1030 | 60 | 0.1 | 1000 |
| B2 | 60 | 0.3 | 1030 | 60 | 0.1 | 1000 |
| B3 | 50 | 0.5 | 1030 | 70 | 0.1 | 1000 |
| B4 | 60 | 0.5 | 1030 | 70 | 0.1 | 830 |
| B5 | 50 | 0.5 | 1030 | 60 | 0.1 | 1000 |
| B6 | 60 | 0.5 | 1030 | 60 | 0.1 | 1000 |
| B7 | 50 | 0.5 | 1030 | 70 | 0.1 | 1000 |
| B8 | 60 | 0.5 | 1030 | 70 | 0.1 | 1000 |
| C1 | 50 | 0.3 | 1030 | 60 | 0.1 | 1000 |
| C2 | 60 | 0.3 | 1030 | 60 | 0.1 | 1000 |
| C3 | 30 | 0.5 | 1030 | 70 | 0.1 | 1000 |
| C4 | 60 | 0.5 | 1030 | 85 | 0.1 | 1000 |
| C5 | 50 | 0.5 | 1030 | 60 | 0.1 | 1000 |
| C6 | 60 | 0.5 | 1030 | 60 | 0.1 | 1000 |
| C7 | 50 | 0.5 | 1030 | 70 | 0.1 | 1000 |
| C8 | 60 | 0.5 | 1030 | 70 | 0.1 | 1000 |
| D1 | 50 | 0.3 | 1030 | 60 | 0.1 | 1000 |
| D2 | 60 | 0.3 | 1030 | 60 | 0.1 | 1000 |
| D3 | 50 | 0.5 | 850 | 70 | 0.1 | 1000 |
| D4 | 60 | 0.5 | 1030 | 70 | 0.3 | 1000 |
| D5 | 50 | 0.5 | 1030 | 60 | 0.1 | 1000 |
| D6 | 60 | 0.5 | 1030 | 60 | 0.1 | 1000 |
| D7 | 50 | 0.5 | 1030 | 70 | 0.1 | 1000 |
| D8 | 60 | 0.5 | 1030 | 70 | 0.1 | 1000 |

**(Table 5)**

| Specimen Number | Maximum strength orientation and {110}<115 > orientation angle difference [°] | {110}<115 > orientation strength / {001}<100 > orientation strength | Average grain size [µm] | W10/400 [W/kg] | Rolling direction B50 [T] | Rolling vertical direction B50 [T] | Remarks |
|---|---|---|---|---|---|---|---|
| A1 | 12 | 1.3 | 88 | 12.3 | 1.68 | 1.64 | Comparativ e example |
| A2 | 20 | 1.1 | 91 | 12.7 | 1.68 | 1.64 | Comparativ e example |
| A3 | 13 | 1.4 | 102 | 12.5 | 1.68 | 1.64 | Comparativ e example |
| A4 | 11 | 0.9 | 95 | 12.4 | 1.68 | 1.64 | Comparativ e example |
| A5 | 3 | 4.3 | 87 | 11.3 | 1.70 | 1.66 | Inventive example |
| A6 | 2 | 5.1 | 91 | 11.4 | 1.70 | 1.66 | Inventive example |
| A7 | 3 | 3.9 | 85 | 11.2 | 1.70 | 1.66 | Inventive example |
| A8 | 1 | 4.1 | 101 | 11.5 | 1.70 | 1.66 | Inventive example |
| B1 | 13 | 1.1 | 94 | 12.6 | 1.68 | 1.64 | Comparativ e example |
| B2 | 11 | 0.8 | 87 | 12.7 | 1.68 | 1.64 | Comparativ e example |
| B3 | 9 | 1.8 | 103 | 12.4 | 1.68 | 1.64 | Comparativ e example |
| B4 | 11 | 1.1 | 32 | 12.6 | 1.68 | 1.64 | Comparativ e example |
| B5 | 2 | 4.5 | 92 | 11.5 | 1.70 | 1.66 | Inventive example |
| B6 | 2 | 6.2 | 88 | 11.4 | 1.70 | 1.66 | Inventive example |
| B7 | 3 | 4.7 | 96 | 11.2 | 1.70 | 1.66 | Inventive example |
| B8 | 3 | 4.6 | 75 | 11.2 | 1.70 | 1.66 | Inventive example |
| C1 | 12 | 0.9 | 102 | 12.7 | 1.68 | 1.64 | Comparativ e example |
| C2 | 8 | 0.8 | 86 | 12.7 | 1.68 | 1.64 | Comparativ e example |
| C3 | 11 | 1.1 | 94 | 12.6 | 1.68 | 1.64 | Comparativ e example |
| C4 | 19 | 1.5 | 95 | 12.4 | 1.68 | 1.64 | Comparativ e example |
| C5 | 1 | 5.3 | 95 | 11.4 | 1.70 | 1.66 | Inventive example |
| C6 | 3 | 4.2 | 91 | 11.4 | 1.70 | 1.66 | Inventive example |
| C7 | 2 | 6.1 | 88 | 11.5 | 1.70 | 1.66 | Inventive example |
| C8 | 2 | 5.4 | 86 | 11.2 | 1.70 | 1.66 | Inventive example |
| D1 | 12 | 1.9 | 92 | 12.3 | 1.68 | 1.64 | Comparativ e example |
| D2 | 9 | 1.3 | 99 | 12.6 | 1.68 | 1.64 | Comparativ e example |
| D3 | 11 | 0.7 | 89 | 12.7 | 1.68 | 1.64 | Comparative example |
| D4 | 11 | 1.3 | 85 | 12.4 | 1.68 | 1.64 | Comparativ e example |
| D5 | 12 | 1.2 | 92 | 12.2 | 1.68 | 1.64 | Comparativ e example |
| D6 | 2 | 3.9 | 103 | 11.3 | 1.70 | 1.66 | Inventive example |
| D7 | 3 | 4.1 | 95 | 11.3 | 1.70 | 1.66 | Inventive example |
| D8 | 2 | 5.3 | 94 | 11.4 | 1.70 | 1.66 | Inventive example |

As shown in Table 1 to Table3, it can be confirmed that the inventive examples in which the steel component is appropriately controlled and some scale remains in the hot-rolled sheet have a specific texture developed, resulting in excellent iron loss and magnetic flux density, and in particular, the difference in magnetic flux density in the rolling direction and the rolling vertical direction is appropriately obtained.

On the other hand, it can be confirmed that when the steel composition is not appropriately controlled, the iron loss and magnetic flux density are inferior.

Furthermore, even if the steel composition is appropriately controlled, if all scale is removed from the hot-rolled sheet, it can be confirmed that the iron loss and magnetic flux density are inferior because a specific texture is not developed. In addition, if the scale is not removed after the first cold-rolling, it can be confirmed that the iron loss and magnetic flux density are inferior due to the scale.

In addition, it can be confirmed that when the scale on the hot-rolled sheet is partially removed, the development of the specific texture is insufficient, and the magnetism is relatively inferior. In addition, it can be confirmed that the magnetism is relatively poor even in cases where the scale is not sufficiently removed after the first cold-rolling.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

## Claims

1. A non-oriented electrical steel sheet, comprising:
in wt%, Si: 1.5 to 4.5%, Al: 0.1 to 1.5%, and Mn: 0.1 to 0.5%, with a balance being Fe and inevitable impurities,
wherein when a texture is represented by an ODF, an orientation having a highest strength is positioned within 5° of {110}<115>.

2. The non-oriented electrical steel sheet of claim 1, wherein
when a texture is represented by an ODF, a {110}<115> orientation strength is more than three times a {001}<100> orientation strength.

3. The non-oriented electrical steel sheet of claim 1, further comprising
0.01 to 0.1 wt% in each or a combined amount of Te: 0.001 to 0.007 wt% and at least one of Sn and Sb.

4. The non-oriented electrical steel sheet of claim 1, further comprising
one or more of Cu: 0.005 to 0.2 wt%, Cr: 0.01 to 0.5 wt%, Ni: 0.05 wt% or less (excluding 0%), Zn: 0.01 wt% or less (excluding 0%), and Co: 0.05 wt% or less (excluding 0%).

5. The non-oriented electrical steel sheet of claim 1, further comprising
one or more of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

6. The non-oriented electrical steel sheet of claim 1, further comprising
one or more of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.0050 wt% or less (excluding 0%), and Mg: 0.0050 wt% or less (excluding 0%).

7. The non-oriented electrical steel sheet of claim 1, wherein
an average grain size is 50 to 150 µm.

8. A method for manufacturing a non-oriented electrical steel sheet, comprising:
a step of hot-rolling a slab including, in wt%, Si: 1.5 to 4.5%, Al: 0.1 to 1.5%, Mn: 0.1 to 0.5%, with a balance being Fe and inevitable impurities, to manufacture a hot-rolled sheet;
a step of first cold-rolling the hot-rolled sheet in a state in which scale remains on the hot-rolled sheet to manufacture a first cold-rolled sheet;
a step of pickling the first cold-rolled sheet;
a step of second cold-rolling the pickled first cold-rolled sheet to produce a second cold-rolled sheet; and
a cold-rolled sheet annealing step of annealing the second cold-rolled sheet.

9. The method for manufacturing the non-oriented electrical steel sheet of claim 8, wherein
the slab further includes 0.01 to 0.1 wt% in each or a combined amount of Te: 0.001 to 0.007 wt% and at least one of Sn and Sb.

10. The method for manufacturing the non-oriented electrical steel sheet of claim 8, wherein
the slab further includes one or more of Cu: 0.005 to 0.2 wt%, Cr: 0.01 to 0.5 wt%, Ni: 0.1 wt% or less (excluding 0%), Zn: 0.01 wt% or less (excluding 0%), and Co: 0.05 wt% or less (excluding 0%).

11. The method for manufacturing the non-oriented electrical steel sheet of claim 8, wherein
the slab further includes one or more of P: 0.1 wt% or less (excluding 0%), C: 0.005 wt% or less (excluding 0%), S: 0.005 wt% or less (excluding 0%), Ti: 0.005 wt% or less (excluding 0%), and N: 0.005 wt% or less (excluding 0%).

12. The method for manufacturing the non-oriented electrical steel sheet of claim 8, wherein
the slab further includes one or more of Mo: 0.03 wt% or less (excluding 0%), B: 0.0050 wt% or less (excluding 0%), V: 0.0050 wt% or less (excluding 0%), Ca: 0.0050 wt% or less (excluding 0%), Nb: 0.0050 wt% or less (excluding 0%), Zr: 0.0050 wt% or less (excluding 0%), and Mg: 0.0050 wt% or less (excluding 0%).

13. The method for manufacturing the non-oriented electrical steel sheet of claim 8, further comprising
a step of heating the slab to a temperature of 1200°C or less before the step of manufacturing the hot-rolled sheet.

14. The method for manufacturing the non-oriented electrical steel sheet of claim 8, wherein
in the step of manufacturing the hot-rolled sheet, hot-rolling is performed at a finishing rolling temperature of 800°C or higher, and winding is performed at 550°C or lower.

15. The method for manufacturing the non-oriented electrical steel sheet of claim 8, wherein
after the step of manufacturing the hot-rolled sheet, the hot-rolled sheet is cooled, and the cooled hot-rolled sheet is first cold-rolled.

16. The method for manufacturing the non-oriented electrical steel sheet of claim 8, further comprising
in the process of cooling the hot-rolled sheet after the step of manufacturing the hot-rolled sheet, a step of rewinding a coil at a temperature of 350°C or higher, wherein the rewinded hot-rolled sheet is first cold-rolled.

17. The method for manufacturing the non-oriented electrical steel sheet of claim 8, wherein
in the step of manufacturing the first cold-rolled sheet, a reduction ratio is 40 to 70% and a friction coefficient between a cold-rolling work roll and the steel sheet is 0.4 or more.

18. The method for manufacturing the non-oriented electrical steel sheet of claim 8, further comprising
after the step of manufacturing the first cold-rolled sheet, an intermediate annealing step of annealing the first cold-rolled sheet at a temperature of 900°C or higher.

19. The method for manufacturing the non-oriented electrical steel sheet of claim 8, wherein
in the step of manufacturing the second cold-rolled sheet, a reduction ratio is 55 to 80% and a friction coefficient between a cold-rolling work roll and the steel sheet is 0.2 or less.

20. The method for manufacturing the non-oriented electrical steel sheet of claim 8, wherein
the cold-rolled sheet annealing step is performed at a temperature of 850°C or higher in a mixed gas atmosphere of hydrogen (H₂) and nitrogen (N₂).
